(19) Europäisches Patentamt
European Patent Office
Office européen des brevets

(11) **EP 2 199 767 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
*G01K 1/06* *(2006.01)*    *G01K 1/16* *(2006.01)*

(21) Anmeldenummer: **09015233.1**

(22) Anmeldetag: **09.12.2009**

(54) **Anordnung zur Polarisation eines Neutronenstrahls mit hoher Divergenz**

Assembly for polarising a neutron beam with high divergence

Agencement de polarisation d'un rayon de neutrons à haute divergence

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.12.2008 DE 102008064101**

(43) Veröffentlichungstag der Anmeldung:
**23.06.2010 Patentblatt 2010/25**

(73) Patentinhaber: **Helmholtz-Zentrum Berlin für Materialien und Energie GmbH**
**14109 Berlin (DE)**

(72) Erfinder: **Krist, Thomas**
**10627 Berlin (DE)**

(56) Entgegenhaltungen:
**DE-A1-102004 031 934**

• **SHAPIRO S M ET AL: "HYSPEC: A crystal time-of-flight hybrid spectrometer for the spallation neutron source with polarization capabilities" PHYSICA B. CONDENSED MATTER, AMSTERDAM, NL LNKD- DOI:10.1016/J.PHYSB. 2006.05.380, Bd. 385-386, 15. November 2006 (2006-11-15), Seiten 1107-1109, XP025118766 ISSN: 0921-4526 [gefunden am 2006-11-15]**
• **KELLER T ET AL: "The polarized neutron small-angle scattering instrument at BENSC Berlin" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL LNKD- DOI: 10.1016/S0168-9002(00)00315-6, Bd. 451, Nr. 2, 1. September 2000 (2000-09-01), Seiten 474-479, XP004216684 ISSN: 0168-9002**

EP 2 199 767 B1

**Beschreibung**

Die Erfindung bezieht sich auf eine Anordnung zur Polarisation eines Neutronenstrahls mit einer solchen hohen Divergenz, bei der ein strahlungsoptisches Bauelement, bestehend aus mindestens einer Schichtenfolge, die aus einem Neutronenleiter (Kanal) besteht, der parallel angeordnete ebene Seitenflächen aufweist, an die jeweils eine spinselektiv reflektierende und eine neutronenabsorbierende Schicht angrenzen in Kombination mit einem Polarisator, verwendet wird.

Die Neutronenstrahlung dient einem breiten Spektrum wissenschaftlicher Untersuchungen von der reinen Grundlagenforschung bis hin zu anwendungsnahen Untersuchungen beispielsweise auf dem Gebiet der Materiestrukturforschung. Um spezielle Untersuchungen an einer Probe durchführen zu können, muss die Strahlung spezielle Eigenschaften aufweisen. So ist es in vielen Fällen erforderlich, dass nur Neutronenstrahlen mit einer Spinkomponente an der Probe ankommen.

In den letzten Jahren ist durch Fortschritte in der Beschichtung der Neutronenleiter die am Experiment zur Verfügung stehende Divergenz etwa verdreifacht worden.

Als Neutronenpolarisatoren bezeichnet man Bauteile, die einen Neutronenstrahl mit fehlender oder unbekannter Polarisation in zwei Strahlen bekannter Polarisation ("spin up" und "spin down") aufspalten. Zur Polarisation eines Neutronenstrahls sind bisher verschiedene Bauteile verwendet worden.

Ein Polarisator unter Verwendung eines Heusler-Kristalls wird in A. Freund, R. Pynn, W. G. Stirling and C. M. E. Zeyen in Physica B 120 (1983) 86-90 beschrieben, wonach dieser Heusler-Kristall aus einem unpolarisierten Neutronenstrahl 73% der Neutronen mit der gewünschten Spin-Komponente mit einer Polarisation von mehr als 95% reflektiert. Heusler-Kristalle haben den Nachteil, dass sie den Strahl ablenken und schwer in guter Qualität zu beschaffen sind und zudem teuer sind.

Eine zweite Methode beschreiben W. Heil, K. Andersen, D. Hofmann, H. Humblot, J. Kulda, E. Lelievre-Berna, O. Schärpf and F. Tasset in Physica B 241-243 (1998) 56-63, wonach mit einem $^3$He Spin-Filter, bei einer Transmission von 23% eine Polarisation von 95% erreicht werden kann. Der Nachteil dieser $^3$He Polarisatoren besteht insbesondere darin, dass sie sehr empfindlich auf Magnetfeldgradienten sind. Sie sind teuer und weisen eine zeitabhängige Polarisation auf.

Als Beispiel für eine dritte Methode ist in F. Mezei in: Neutron Optical Devices, ed. C. Majkrzak, Proc. SPIE 983 (1989), pp 10-17 das Prinzip einer polarisierenden "cavity" beschrieben, und in Th. Krist, C. Pappas, Th. Keller and F. Mezei, Physica B 213-214 (1995) 939-941, wird eine Realisierung dieses Vorschlags vorgestellt. Bei dieser Vorrichtung wird in einen an den Außenwandungen verspiegelten Neutronenleiter diagonal eine spinselektiv reflektierende Schicht eingebracht. Diese spinselektiv reflektierende Schicht transmittiert für einen bestimmten Bereich von Eintrittswinkeln der Neutronen lediglich die gewünschte Spinkomponente, während die andere Spinkomponente reflektiert und in der Außenwand absorbiert wird. Cavities mit Seitenwänden in Strahlrichtung, bei denen polarisierende Superspiegel unter einem festen Winkel in den Strahl gestellt werden, transmittieren Neutronen nur bis zu einer Divergenz, die durch den Grenzwinkel der Seitenwandbeschichtung gegeben ist.

Weiterhin sind zur Polarisation sogenannte Bender bekannt, bei denen die Neutronenleiter eine Krümmung aufweisen und somit den Strahl ablenken. Bei der Verwendung sogenannter S-Bender tritt der Neutronenstrahl zwar in der gleichen Richtung aus, aber die Divergenz des Gesamtstrahls wird erhöht und die Austrittswinkel sind nicht mehr mit den Einfallswinkeln korreliert. Außerdem verringert sich die Transmission durch die im Vergleich zu den einfachen Bendern größere Baulänge.

Die Verwendung eines sehr langen gekrümmten Leiters erfordert eine sehr große Baulänge, die je nach Kanalbreite zwischen 10 und 50 m liegt, und damit entweder die Entscheidung für einen dauerhaft polarisierten Strahl oder einen Wechselmechanismus, der den Austausch gegen einen nichtpolarisierenden Leiter gestattet.

In Th. Krist, S. J. Kennedy, T. J. Hicks und F. Mezei ,Physica B 241 - 243 (1998) 82-85 ist ein Polarisator beschrieben, bei dem als neutronenleitende Schichten Siliziumwafer verwendet werden. Auf die Siliziumwafer sind auf einer Seite eine Superspiegelschicht und auf der gegenüberliegenden Seite eine absorbierende Schicht aufgebracht. Ein Bauelement ist aus ca. 100 beschichteten Siliziumwafern aufgebaut. Der Polarisator weist eine Krümmung auf, die einer Auslenkung von ca. einer Wafer-Dicke entspricht. Dieser Polarisator ist auch in der DE 198 44 300 A1 beschrieben. Wird die Absorptionsschicht weggelassen, kann der Polarisator als Weiche betrieben werden, der die eine Spin-Komponente reflektiert und die andere transmittiert, wodurch zwei polarisierte Neutronenstrahlen unterschiedlicher Spinkomponente und in unterschiedlicher Ausbreitungsrichtung entstehen. In Th. Krist, J. Peters, H. M. Shimizu, J. Suzuki, T. Oku, Physica B 356 (2005) 197-200 ist beschrieben, wie mithilfe eines Kollimators der transmittierte Strahl genutzt werden kann. Wegen der dreieckigen Transmissionsfunktion eines Kollimators mit absorbierenden Wänden geht hier aber mehr als die Hälfte der Neutronen verloren.

In der DE 199 36 898 C1 wird ein Neutronenpolarisator beschrieben, der aus Schichtenfolgen aufgebaut ist, bei dem die neutronenleitenden Schichten konisch ausgebildet sind und an deren Grundfläche eine reflektierende Schicht angrenzt, der sich eine neutronenabsorbierende Schicht anschließt. An der zweiten Seitenfläche, die in einem kleinen Winkel zur Grundfläche verläuft, grenzt eine spinselektiv reflektierende Schicht an. Die analog aufgebauten Schichtenfolgen sind derart angeordnet, dass die Grundflächen der keilförmig ausgebildeten neutronenleitenden Schichten parallel verlaufen und die spinselektiv reflektierenden Schichten diagonal durch das Bauelement verlaufen. Somit ist gewährleistet, dass alle das Bauelement passierenden Neutronen mindestens einmal auf eine spinselektiv reflektierende Schicht treffen und somit nur die gewünschte Spinkomponente transmittiert wird. Dieser Polarisator entspricht in seiner Wirkung einer Cavity. Der Nachteil dieser Lösung besteht darin, dass dieses Bauelement wegen seiner keilförmigen Wafer technologisch sehr kompliziert ist und bisher nicht realisiert wurde.

In Physica B 385-386 (2006) 1107-1109 ist eine Anordnung aus Radialkollimator, bestehend aus einem Stapel von mit unpolarisierenden Superspiegelschichten bedeckten Si-Platten, die zwischen Gadolinium angeordnet sind, und einem nachgeordneten Transmissionspolarisator aus einem Stapel von gebogenen, mit polarisierenden Superspiegeln versehenen Si-Platten beschrieben. Erst im zweiten strahlungsoptischen Bauelement, dem gebogenen Transmissionspolarisator, werden die Neutronen entsprechend ihrem Spin getrennt. Dadurch ist ein getrennter Nachweis der beiden Spinkomponenten nach Austritt aus dem Transmissionspolarisator möglich.

Fast immer ist die Polarisation an einem Neutronenstreuinstrument eine Zusatzoption. Werden hierfür Bauelemente eingesetzt, die den Neutronenstrahl ablenken, so ist bei ihrem Einsatz jeweils eine Neujustierung des Geräts erforderlich.

Mit den bekannten Einrichtungen nach dem Stand der Technik lassen sich Neutronenstrahlen, die eine hohe Divergenz aufweisen, entweder nicht vollständig polarisieren oder die Richtung oder die Divergenz des Neutronenstrahls werden verändert oder die transmittierte Intensität ist sehr klein.

Die Aufgabe der Erfindung besteht darin, eine Anordnung vorzuschlagen, mit der ein Neutronenstrahl, der eine hohe Divergenz aufweist, polarisiert werden kann und die Polarisation einen sehr hohen Grad aufweist. Die Anordnung soll eine geringe Baulänge und geringe Transmissionsverluste aufweisen, und die Flugbahn der Neutronen soll nicht störend verändert werden, d. h. der Neutronenstrahl soll in seiner Richtung nicht verändert und seine Divergenz nicht erhöht werden. Die Anordnung soll kompakt und kostengünstig herzustellen sein.

Diese Aufgabe wird erfindungsgemäß gelöst durch eine Anordnung mit den Merkmalen des Anspruchs 1. Dabei besteht diese Anordnung zur Polarisation eines Neutronenstrahls mit hoher Divergenz aus zwei strahlungsoptischen Bauelementen, die im Strahlengang hintereinander angeordnet sind. Das erste strahlungsoptische Bauelement ist ein polarisierender Kollimator, der aus mindestens einer Schichtenfolge gebildet wird, die aus einem Neutronenleiter (Kanal) besteht, der parallel angeordnete ebene Seitenflächen aufweist, an die jeweils eine spinselektiv reflektierende Schicht angrenzt. An diese wiederum grenzt jeweils eine neutronenabsorbierende Schicht an.

Der polarisierende Kollimator ist parallel zur Strahlachse des Neutronenstrahls in diesem angeordnet.

Die Länge und die Kanalbreite des polarisierenden Kollimators bestimmen den Kollimatorwinkel $\Theta_K$, also den maximalen Winkel, unter dem ein Neutron den Kanal passieren kann, ohne auf eine Wand zu treffen. Der Kollimatorwinkel errechnet sich wie folgt:

$$\Theta_K = \text{arc tan } (d/L)$$

Dabei ist d = Kanalbreite und L = Länge des Kollimators.

Neutronen, die mit einem Eintrittswinkel oberhalb des Kollimatorwinkels $\Theta_K$ in den polarisierenden Kollimator eintreten, treffen mindestens einmal auf eine spinselektiv reflektierende Wand. Dort werden Neutronen mit der gewünschten Spinkomponente reflektiert und verlassen den polarisierenden Kollimator mit dem gleichen Winkelbetrag relativ zur Strahlachse, mit dem sie eingetreten sind, sie weisen also die gleiche Divergenz auf. Neutronen mit der nicht gewünschten Spinkomponente werden an der spinselektiv reflektierenden Schicht nicht reflektiert, sondern durch diese transmittiert und werden dann in der dahinter angeordneten neutronenabsorbierenden Schicht absorbiert. Somit verlassen nur die Neutronen, die die gewünschte Spinkomponente aufweisen, das erste strahlungsoptische Bauelement, wobei sie die gleiche Divergenz mit dem gleichen Winkelbetrag relativ zur Strahlachse beibehalten.

Neutronen, die mit einem Eintrittswinkel unterhalb des Kollimatorwinkels $\Theta_K$ in den polarisierenden Kollimator eintreten, treffen - je nach Kombination von Eintrittswinkel und Eintrittsort - zur Hälfte auf eine Seitenwand und werden schon im polarisierenden Kollimator polarisiert. Das folgt aus der dreiecksförmigen Transmissionsfunktion eines Kollimators mit absorbierenden Wänden. Neutronen mit dem Eintrittswinkel 0° werden am besten, die mit einem Eintrittswinkel nahe dem Kollimatorwinkel $\Theta_K$ werden am schlechtesten transmittiert. Dazwischen besteht eine lineare Abhängigkeit. Aufgrund der dreieckigen Transmissionsfunktion werden gerade 50% der in dem gesamten Winkelintervall anfallenden Neutronen transmittiert. Das liegt daran, dass Neutronen, die mit einem kleinen Winkel zur Strahlachse aber einem Eintrittsort nahe einer Wand in den Kanal eintreten, diese Wand berühren. Die andere Hälfte trifft keine Seitenwand und verlässt den polarisierenden Kollimator in ihrer ursprünglichen Richtung und unpolarisiert. Dieser austretende unpolarisierte und nicht beeinflusste Neutronenstrahl weist aber nunmehr eine geringere Divergenz als der Eintrittsstrahl auf.

Die Divergenz der unpolarisiert austretenden Neutronen beträgt typischerweise ca. ein Drittel der Eintrittsdivergenz, so dass der austretende Neutronenstrahl nun einfacher polarisiert werden kann.

Die erfindungsgemäße Anordnung wird komplettiert durch ein in Strahlrichtung hinter dem ersten strahlungsoptischen Bauelement, dem polarisierenden Kollimator, angeordnetes weiteres strahlungsoptisches Bauelement, das sowohl die aus dem polarisierenden Kollimator austretenden nicht polarisierten Neutronen polarisiert, wie auch die dort schon polarisierten Neutronen transmittiert.

Bei einer bevorzugten Ausführung wird als zweites strahlungsoptisches Bauelement in Strahlrichtung hinter dem ersten strahlungsoptischen Bauelement, dem polarisierenden Kollimator, eine modifizierte Cavity angeordnet. Bei einer Cavity nach dem Stand der Technik sind die parallelen Außenwandungen des Neutronenleiters mit reflektierenden Schichten und dahinter angeordneten absorbierenden Schichten bzw. absorbierendem Glas versehen. Die spinselektiv reflektierende Schicht ist auf einer diagonal in den Neutronenleiter eingebrachten neutronenleitenden Schicht aufgebracht. Diese spinselektiv reflektierende Schicht transmittiert für einen bestimmten Bereich von Eintrittswinkeln der Neutronen lediglich die gewünschte Spinkomponente, während die andere Spinkomponente reflektiert und in der Außenwand absorbiert wird.

Im Gegensatz dazu sind bei der erfindungsgemäß verwendeten Cavity die in Strahlrichtung stehenden Seitenwände mit spinselektiv reflektierenden Schichten versehen. Diese haben vorteilhafterweise den gleichen Grenzwinkel wie die spinselektiv reflektierenden Schichten im polarisierenden Kollimator und stehen parallel zu ihnen. Die diagonal eingesetzte Wand hat zumindest auf der Vorderseite eine Beschichtung, die alle Neutronen bis zu einem Grenzwinkel reflektiert. Bis zu diesem Winkel abzüglich des Anstellwinkels der diagonalen Wand werden alle Neutronen, die den polarisierenden Kollimator verlassen und in die Cavity eintreten, auf die Seitenwände reflektiert. Da die Seitenwände mit spinselektiv reflektierenden Schichten versehen sind, werden die Neutronen mit der gewünschten Spinkomponente an diesen reflektiert, während Neutronen mit der nicht gewünschten Spinkomponente an den spinselektiv reflektierenden Schichten nicht reflektiert werden, sondern durch diese transmittiert und dann in der dahinter angeordneten neutronenabsorbierenden Schicht absorbiert werden. Somit wird erreicht, dass nur noch Neutronen mit der gewünschten Spinkomponente die Cavity verlassen.

Dadurch, dass die aus dem polarisierenden Kollimator austretenden nicht polarisierten Neutronen eine geringe Divergenz aufweisen, d. h. einen geringen Winkel zur Strahlachse haben, kann die diagonal eingesetzte Wand, die mit einer bis zu einem Grenzwinkel reflektierenden Schicht versehen ist, steiler in den Neutronenstrahl gestellt werden, als es ohne den davor angeordneten polarisierenden Kollimator erforderlich wäre. Dadurch kann die Cavity kürzer aufgebaut werden. Neutronen, die mit einem Eintrittswinkel oberhalb des Kollimatorwinkels $\Theta_K$ in die erfindungsgemäße Anordnung eintreten, werden bereits im polarisierenden Kollimator polarisiert und werden (wegen des größeren Eintrittswinkels) an der diagonal eingesetzten Wand der Cavity nicht reflektiert, sondern durch diese transmittiert. Treffen solche Neutronen zuerst auf eine Seitenwand, so werden sie dort reflektiert, da sie ja die gewünschte Spinkomponente aufweisen und werden ebenfalls an der diagonal eingesetzten Wand der Cavity durch diese transmittiert. Somit verlassen diese Neutronen unbeeinflusst die Cavity in der gleichen Richtung und mit dem gleichen Winkelbetrag relativ zur Strahlachse.

Die in die Cavity mit einem Eintrittswinkel unterhalb des Kollimatorwinkels $\Theta_K$ eintretenden unpolarisierten und auch die bereits polarisierten Neutronen werden an der diagonalen Schicht reflektiert und an einer der beiden Seitenwände, die mit spinselektiv reflektierenden Schichten versehen sind, polarisiert.

Durch die Anordnung der beiden strahlungsoptischen Bauelemente, Polarisierender Kollimator und modifizierte Cavity hintereinander im Neutronenstrahl, wird gewährleistet, dass nur polarisierte Neutronen die erfindungsgemäße Anordnung verlassen.

Anstelle von einer diagonal angeordneten Wand können auch zwei V-förmig angeordnete Wände zwischen den Seitenwänden der Cavity angeordnet sein. Die Eintrittsfläche der Cavity ist mindestens so groß wie die Austrittsfläche des Polarisierenden Kollimators. Beide Bauelemente sind mit einem geringen Abstand zueinander und in einer Ebene hintereinander im Neutronenstrahl angeordnet.

Eine weitere Modifikation der Cavity sieht vor, dass mehrere Cavities parallel nebeneinander in dem Neutronenstrahl angeordnet werden. Dadurch, dass mehrere diagonal angeordnete reflektierende Schichten parallel zur Strahlachse nebeneinander im Neutronenstrahl stehen, können diese bei gleichem Anstellwinkel kürzer ausgeführt werden. Die Länge der Cavity kann um den Faktor verkürzt werden, der der Anzahl der Cavities entspricht.

Bei einer anderen Ausführung der Anordnung zur Polarisation eines Neutronenstrahls mit hoher Divergenz wird in Strahlrichtung hinter dem ersten strahlungsoptischen Bauelement, dem olarisierenden Kollimator, ein zweiter analog aufgebauter polarisierender Kollimator angeordnet. Der erste polarisierende Kollimator ist parallel zur Strahlachse des Neutronenstrahls angeordnet. Die Kanäle des zweiten polarisierenden Kollimators sind in der gleichen Ebene wie die des ersten polarisierenden Kollimators angeordnet, weisen aber einen gewissen Anstellwinkel zu dieser Ebene, die in Richtung der Strahlachse verläuft, auf. Der Anstellwinkel ist derart gewählt, dass die aus dem ersten polarisierende Kollimator austretenden nicht polarisierten Neutronen, die nur noch eine geringe Divergenz aufweisen, mindestens einmal auf eine Wand mit einer spinselektiv reflektierenden Schicht treffen. Dort werden sie, in Abhängigkeit von ihrer Spinkomponente reflektiert bzw. transmittiert. Die Neutronen mit der gewünschten Spinkomponente werden an diesen reflektiert, während Neutronen mit der nicht gewünschten Spinkomponente an den spinselektiv reflektierenden Schichten nicht reflektiert werden, sondern durch diese transmittiert und dann in der dahinter angeordneten neutronenabsorbierenden Schicht absorbiert werden.

Bei einer bevorzugten Ausführung der Erfindung, die als Kreuzpolarisator bezeichnet werden kann, wird in Strahlrichtung (z-Richtung) hinter dem ersten strahlungsoptischen Bauelement, dem polarisierenden Kollimator, ein zweiter analog aufgebauter polarisierender Kollimator angeordnet. Der erste polarisierende Kollimator ist derart im Strahl angeordnet, dass die beschichteten Seitenflächen der Kanäle parallel zur y-z-Ebene ausgerichtet sind, wodurch die Divergenz der hinter dem ersten polarisierenden Kollimator austretenden nichtpolarisierten Neutronen in der x-Richtung verringert ist. Der zweite polarisierende Kollimator ist derart im Strahl angeordnet, dass die beschichteten Seitenflächen der Kanäle parallel zur x-z-Ebene ausgerichtet sind, also um 90 ° gegenüber dem ersten polarisierenden Kollimator gedreht angeordnet sind. Da die aus dem ersten polarisierenden Kollimator austretenden nicht polarisierten Neutronen in der x-Richtung eine geringe Divergenz aufweisen, wird die Divergenz dieser Neutronen im zweiten polarisierenden Kollimator durch die parallel zur x-z-Ebene ausgerichteten spinselektiv reflektierenden Schichten in der y-Richtung begrenzt. Dadurch quadriert sich der Polarisationseffekt, und es können Polarisationswerte über 95% erreicht werden.

Vorteilhafte Ausgestaltungen der erfindungsgemäßen Anordnung zur Polarisation eines Neutronenstrahls mit hoher Divergenz können den Unteransprüchen entnommen werden.

Die Erfindung wird nachstehend an Hand von Ausführungsbeispielen näher erläutert. Die dazugehörigen Figuren zeigen:

Fig. 1   Ausführung eines polarisierenden Kollimators,
Fig. 2   Anordnung aus polarisierendem Kollimator und modifizierter Cavity.

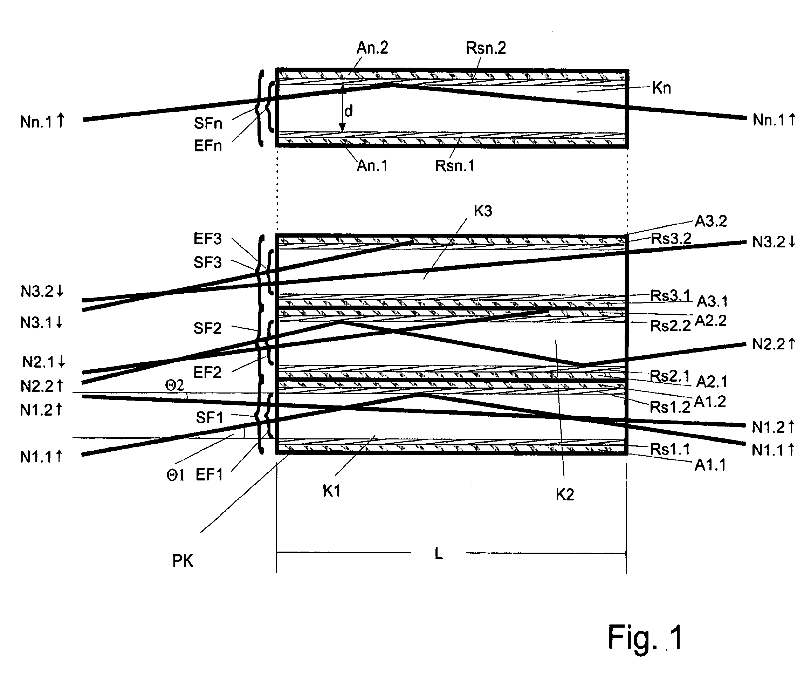

In Fig. 1 ist eine Ausführung für das erste strahlungsoptische Bauelement dargestellt, das als polarisierender Kollimator ausgebildet ist. Der polarisierende Kollimator besteht mindestens aus einer Schichtenfolge **SF1, SF2, SF3,** ..., **SFn.** Dabei besteht jede Schichtenfolge **SF1, SF2, SF3, ..., SFn** aus einem Neutronenleiter, dem Kanal **K1, K2, K3,..., Kn,** der parallel angeordnete, ebene Seitenflächen aufweist. Diese Seitenflächen sind jeweils mit einer spinselektiv reflektierenden Schicht **Rs1.1, Rs2.1, Rs3.1,..., Rsn.1, Rs1.2, Rs2.2, Rs3.2,..., Rsn.2** versehen, wobei diese wiederum jeweils mit einer neutronenabsorbierenden Schicht **A1.1, A2.1, A3.1, A3.1,..., An.1, A1.2, A2.2, A3.2, ..., An.2** versehen sind. Der polarisierende Kollimator ist parallel zur Strahlachse des Neutronenstrahls in diesem angeordnet.

Durch die Länge **L** des Kollimators und die Kanalbreite **d** wird der Kollimatorwinkel $\Theta_K$ bestimmt. Mit Kollimatorwinkel $\Theta_K$ wird der Winkel bezeichnet, der dem größten Eintrittswinkel der Neutronen entspricht, die ohne Wandberührung durch den Kollimator hindurch treten können. Der Kollimatorwinkel $\Theta_K$ errechnet sich wie folgt:

$$\Theta_K = \text{arc tan } (d/L).$$

Die spinselektiv reflektierenden Schichten sind im gewählten Beispiel Superspiegel mit einem Grenzwinkel von 1.5° für Neutronen mit der Wellenlänge 0,5 nm. Die Divergenz des zu polarisierenden Neutronenstrahls beträgt z. B. $\pm 1.5°$. Mit dem polarisierenden Kollimator soll die Divergenz, der Austrittswinkel der nicht polarisierten Neutronen begrenzt werden auf $\pm 0.5°$, d. h. der Kollimatorwinkel soll 0.5° betragen. Die neutronenleitenden Schichten, die Kanäle, bestehen hier aus Siliziumwafern mit einer Stärke von 0,15 mm. Bei einer Kanalbreite **d** von 0,15 mm muss in diesem Fall die Länge **L** ca. 17,2 mm betragen.

Es besteht auch die Möglichkeit, dass die Kanäle **K1, K2, K3,..., Kn** nicht aus einem festen Material bestehen, sondern aus einem gasförmigen Medium bestehen bzw. ein Vakuum aufweisen, die von festen Wänden begrenzt werden. Diese Wände können beispielsweise aus neutronenabsorbierendem Glas bestehen, die auf ihren Innenflächen mit einer spinselektiv reflektierenden Schicht versehen sind.

Die Wirkungsweise des polarisierenden Kollimators wird an Hand von Neutronen beschrieben, die mit unterschiedlicher Divergenz, also unterschiedlichen Eintrittswinkeln, mit unterschiedlichen Spinkomponenten, spin-up bzw. spin-down in die Kanäle des polarisierenden Kollimators eintreten.

Das Neutron **N1.1**↑ hat im gewählten Beispiel die gewünschte Spinkomponente spin up und tritt mit dem Eintrittswinkel $\Theta_1$, der hier größer ist als der Kollimatorwinkel $\Theta_K$, durch die Eintrittsfläche **EF1** in den Kanal **K1** der ersten Schichtenfolge **SF1** ein. Da der Eintrittswinkel $\Theta_1$ des Neutrons **N1.1**↑ größer ist als der Kollimatorwinkel des polarisierenden Kollimators, trifft dieses Neutron auf die spinselektiv reflektierende Schicht **Rs1.2.** An dieser spinselektiv reflektierenden Schicht **Rs1.2** wird das Neutron **N1.1**↑ reflektiert, da es die gewünschte Spinkomponente (spin-up) aufweist und verlässt den Kanal **K1** am Ende des polarisierenden Kollimators mit der gleichen Divergenz und mit dem gleichen Winkelbetrag relativ zur Strahlachse, wobei der Winkel jetzt - $\Theta_1$ beträgt, während es mit $\Theta_1$ in den Kanal **K1** eingetreten ist.

Das Neutron **N1.2**↑ tritt mit dem Eintrittswinkel $\Theta_2$, der hier kleiner ist als der Kollimatorwinkel $\Theta_K$, ebenfalls

durch die Eintrittsfläche **EF1** in den Kanal **K1** der ersten Schichtenfolge **SF1** ein. Da der Eintrittswinkel $\Theta_2$ des Neutrons **N1.2**↑ kleiner ist als der Kollimatorwinkel $\Theta_K$ des polarisierenden Kollimators und es nicht nahe einer Wand eintritt, fliegt dieses Neutron ohne Wandberührung und ohne jegliche Beeinflussung durch den Kollimator hindurch. Das Neutron **N1.2**↑ verlässt also den polarisierenden Kollimator mit der gleichen Divergenz und mit der gleichen Spinkomponente, spin-up, mit der es eingetreten ist.

Das Neutron **N2.1**↓ hat im gewählten Beispiel die nicht gewünschte Spinkomponente spin down und tritt mit einem Eintrittswinkel, der größer ist als der Kollimatorwinkel $\Theta_K$, durch die Eintrittsfläche **EF2** in den Kanal **K2** der zweiten Schichtenfolge **SF2** ein. Da der Eintrittswinkel des Neutrons **N2.1**↓ größer ist als der Kollimatorwinkel des polarisierenden Kollimators, trifft dieses Neutron auf die spinselektiv reflektierende Schicht **Rs2.2**. Da es aber die nicht gewünschte Spinkomponente spin-down aufweist, wird es an dieser spinselektiv reflektierende Schicht **Rs2.2** nicht reflektiert, sondern tritt durch diese hindurch. Es trifft nun auf die hinter der spinselektiv reflektierende Schicht **Rs2.2** angeordnete absorbierende Schicht **A2.2,** von der es absorbiert wird. Das Neutron **N2.1**↓ kann den polarisierenden Kollimator nicht verlassen.

Das Neutron **N2.2**↑ hat wieder die gewünschte Spinkomponente spin up und tritt mit dem Eintrittswinkel, der auch größer ist als der Kollimatorwinkel $\Theta_K$, durch die Eintrittsfläche **EF2** in den Kanal **K2** der zweiten Schichtenfolge **SF2** ein. Der Eintrittswinkel des Neutrons **2.2**↑ ist größer als der Kollimatorwinkel und das Neutron **N2.2**↑ trifft bereits am Anfang des Kanals **K2** auf die spinselektiv reflektierende Schicht **Rs2.2**. Da es die gewünschte Spinkomponente aufweist, wird es mit dem gleichen Winkel durch die spinselektiv reflektierende Schicht **Rs2.2** reflektiert und trifft weiter hinten im Kanal **K2** nun auf die spinselektiv reflektierende Schicht **Rs2.1.** An dieser spinselektiv reflektierenden Schicht **Rs2.1** wird das Neutron **N2.2**↑ wieder reflektiert und verlässt den Kanal **K2** am Ende des polarisierenden Kollimators, da es zweimal reflektiert wurde, in der gleichen Richtung und mit der gleichen Divergenz, mit der es in den Kanal **K2** eingetreten ist.

Das Neutron N3.1 ↓ hat wieder die nicht gewünschte Spinkomponente spin down und tritt mit einem Eintrittswinkel, der größer ist als der Kollimatorwinkel $\Theta_K$, durch die Eintrittsfläche EF3 in den Kanal K3 der dritten Schichtenfolge SF3 ein. Da der Eintrittswinkel des Neutrons N3.1↓ größer ist als der Kollimatorwinkel des polarisierenden Kollimators, trifft dieses Neutron auf die spinselektiv reflektierende Schicht Rs3.2. Da es aber auch nicht gewünschte Spinkomponente, spin-down, aufweist, wird es an dieser spinselektiv reflektierende Schicht Rs3.2 nicht reflektiert, sondern tritt durch diese hindurch. Es trifft nun auf die hinter der spinselektiv reflektierende Schicht Rs3.2 angeordneten absorbierenden Schicht A3.2, von der es absorbiert wird. Das Neutron **N3.1**↓ kann den polarisierenden Kollimator nicht verlassen.

Das Neutron **N3.2**↓**,** das die nicht gewünschte Spinkomponente spin-down aufweist, tritt mit einem Eintrittswinkel, der kleiner ist als der Kollimatorwinkel $\Theta_K$, durch die Eintrittsfläche **EF3** in den Kanal **K3** der dritten Schichtenfolge **SF3** ein. Da der Eintrittswinkel des Neutrons **3.2**↓ kleiner ist als der Kollimatorwinkel $\Theta_K$ des polarisierenden Kollimators, tritt dieses Neutron ohne Wandberührung und ohne jegliche Beeinflussung durch den Kollimator hindurch. Das Neutron **3.2**↓ verlässt also den polarisierenden Kollimator in der gleichen Richtung, mit der gleichen Divergenz und mit der gleichen, nicht gewünschten Spinkomponente (spin-down), mit der es in diesen eingetreten ist.

Der polarisierende Kollimator ist aus ca. 100 analogen Schichtenfolgen **SF1, SF2, SF3, ..., SFn** aufgebaut. Im gewählten Beispiel wird noch die letzte Schichtenfolge **SFn** eines polarisierenden Kollimators dargestellt. Das Neutron **Nn.1**↑ hat die gewünschte Spinkomponente (spin up) und tritt mit einem Eintrittswinkel, der größer als der Kollimatorwinkel $\Theta_K$ ist, durch die letzte Eintrittsfläche **EFn** in den Kanal **Kn** der letzten Schichtenfolge **SFn** ein. Da der Eintrittswinkel des Neutrons **Nn.1**↑ größer ist als der Kollimatorwinkel des polarisierenden Kollimators, trifft dieses Neutron auf die spinselektiv reflektierende Schicht **Rsn.2**. An dieser spinselektiv reflektierenden Schicht **Rsn.2** wird das Neutron **Nn.1**↑**,** da es die gewünschte Spinkomponente (spin-up) aufweist, reflektiert und verlässt den Kanal **Kn** am Ende des polarisierenden Kollimators mit dem gleichen Winkelbetrag der Divergenz, mit der es in den Kanal **Kn** eingetreten ist.

Somit ist gewährleistet, dass aus dem polarisierenden Kollimator Neutronen austreten, die die gewünschte Spinkomponente **N1.1**↑**, N1.2**↑**, N2.2**↑**,** und **Nn.1**↑**,** und die gleiche Divergenz aufweisen wie der eintretende Neutronenstrahl. Weiterhin treten aus dem polarisierenden Kollimator Neutronen aus, die die nicht gewünschte Spinkomponente **N3.2**↓ aufweisen, die aber nur noch eine Divergenz aufweisen, die dem Kollimatorwinkel $\Theta_K$ entspricht.

Dieser aus dem ersten strahlungsoptischen Bauelement der erfindungsgemäßen Anordnung austretende Neutronenstrahl weist somit zwei Strahlanteile auf, wobei der erste Strahlanteil bereits polarisiert ist und die gleiche Divergenz wie der eintretende Neutronenstrahl aufweist und der zweite Strahlanteil nicht polarisiert ist, aber nur noch eine geringe Divergenz aufweist.

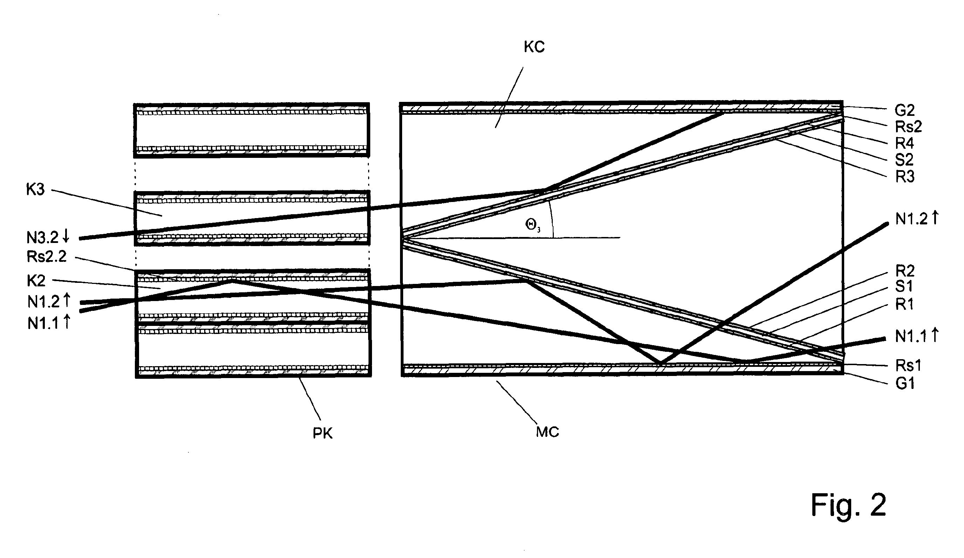

Eine erste Anordnung zur Polarisation eines Neutronenstrahls mit hoher Divergenz wird in der Fig. 2 dargestellt, die aus einem polarisierenden Kollimator **PK,** entsprechend Fig.1 und einer im Neutronenstrahl dahinter angeordneten modifizierten Cavity **MC** besteht. Die im dargestellten Beispiel verwendete Cavity ist allerdings gegenüber den Cavities nach dem bekannten Stand der Technik modifiziert. Bei der erfindungsgemäß verwendeten modifizierten Cavity **MC** sind die in Strahlrichtung angeordneten Seitenwände **G1, G2** mit spinselektiv reflektierenden Schichten **Rs1, Rs2** versehen. Diese haben vorteilhafterweise den gleichen Grenzwinkel wie die spinselektiv reflektierenden Schichten **Rs1.1, Rs2.1, Rs3.1, Rsn.1, Rs1.2, Rs2.2, Rs3.2, Rsn.2** im polarisierenden Kollimator **PK**. Die diagonal in die Cavity **MC** eingesetzten Wände **S1, S2,** die aus Siliziumwafern bestehen, sind in der dargestellten Ausführungen V-förmig im Kanal **KC** angeordnet, wobei die Spitze am Beginn der Cavity **MC** angeordnet ist und die Enden der Wände **S1, S2** am Ende der Cavity **MC** an den Seitenwänden **G1, G2** anliegen. Die diagonal angeordneten Wände **S1, S2** stehen mit einem Anstellwinkel $\Theta_3$ im Kanal **KC** der Cavity **MC**. Die V-förmig im Kanal **KC** der Cavity **MC** angeordneten Wände **S1, S2,** haben eine Beschichtung mit nicht spinselektiv reflektierenden Schichten **R1, R2, R3, R4**. Durch diese reflektierenden Schichten **R1, R2, R3, R4** werden alle Neutronen, die bis zu einem Winkel, der kleiner als der Grenzwinkel $\Theta_C$ der Beschichtung ist, auf eine der beiden diagonal angeordneten Wände **S1, S2** treffen, an diesen reflektiert. Neutronen, die mit einem Winkel, der größer als der Grenzwinkel $\Theta_C$ der Beschichtung ist, auf eine der beiden diagonal angeordneten Wände **S1, S2** treffen, werden an diesen nicht reflektiert, sondern durch diese transmittiert. Dadurch, dass die reflektierenden Schichten **R1, R2, R3, R4** mit dem Anstellwinkel $\Theta_3$ im Kanal **KC** der Cavity **MC** angeordnet sind, werden Neutronen, deren Eintrittswinkel kleiner ist als die Summe aus Grenzwinkel $\Theta_C$ und Anstellwinkel $\Theta_3$, reflektiert. In diesem Beispiel ist dieser resultierende Winkel so gewählt, dass er etwas größer ist als der Kollimatorwinkel $\Theta_K$ des polarisierenden Kollimators **PK**.

Die Wirkungsweise der Anordnung zur Polarisation eines Neutronenstrahls mit hoher Divergenz wird an Hand von Neutronen beschrieben, die mit unterschiedlicher Divergenz, also unterschiedlichen Eintrittswinkeln, mit unterschiedlichen Spinkomponenten, spin-up bzw. spin-down, in die erfindungsgemäße Anordnung eintreten. Der dargestellte polarisierende Kollimator **PK** entspricht dem zu Fig. 1 detailliert beschriebenen strahlungsoptischen Bauelement. Zur besseren Übersichtlichkeit wurden hier aber nur einige Neutronen und Bezugszeichen für die Kanäle und Schichten eingetragen.

Das Neutron **N1.1**↑ weist die gewünschte Spinkomponente (spin up) auf und tritt mit einem Eintrittswinkel, der größer als der Kollimatorwinkel $\Theta_K$ ist, in den Kanal **K2** der zweiten Schichtenfolge des polarisierenden Kollimators **PK** ein. Da der Eintrittswinkel des Neutrons **N1.1** T größer ist als der Kollimatorwinkel des polarisierenden Kollimators, trifft dieses Neutron auf die spinselektiv reflektierende Schicht **Rs2.2**. An dieser wird das Neutron **N1.1**↑ reflektiert, da es die gewünschte Spinkomponente (spin-up) aufweist und verlässt den polarisierenden Kollimator **PK** mit dem gleichen Winkelbetrag relativ zur Strahlachse, mit der es in den polarisierenden Kollimator **PK** eingetreten ist. Dieses Neutron **N1.1**↑ tritt dann in den Kanal **KC** der Cavity **MC** ein und trifft auf die spinselektiv reflektierende Schicht **Rs1.1**. Da das Neutron **N1.1**↑ die gewünschte Spinkomponente (spin-up) aufweist, wird es reflektiert. Es trifft nun auf die reflektierende Schicht **R1,** die auf der diagonalen Schicht **S1** angeordnet ist und wird durch diese sowie durch den Siliziumwafer **S1** und die zweite reflektierende Schicht **R2** transmittiert, da der Winkel, mit dem das Neutron **N1.1**↑ auf diese reflektierenden Schichten **R1** und **R2** trifft, größer als der Grenzwinkel $\Theta_C$ dieser Schichten ist, und verlässt die Cavity **MC** in der gleichen Richtung und mit der gleichen Divergenz, mit der es in den polarisierenden Kollimator **PK** eingetreten ist, da dieses Neutron zweimal an den parallel zur Strahlachse angeordneten spinselektiv reflektierenden Schichten, einmal an der Schicht **Rs2.2** des polarisierenden Kollimators **PK** und einmal an der spinselektiv reflektierenden Schicht **Rs1.1** der Cavity **MC,** reflektiert wurde.

Das Neutron **N1.2**↑ tritt in den Kanal **K2** der zweiten Schichtenfolge des polarisierenden Kollimators **PK** ein. Da der Eintrittswinkel des Neutrons **N1.2**↑ kleiner ist als der Kollimatorwinkel $\Theta_K$ des polarisierenden Kollimators und es nicht nahe einer Wand eintritt, fliegt dieses Neutron ohne Wandberührung und ohne jegliche Beeinflussung durch den polarisierenden Kollimator **PK** hindurch. Das Neutron **N1.2**↑ verlässt also den polarisierenden Kollimator **PK** mit der gleichen Divergenz und mit der gleichen Spinkomponente spin-up, mit der es in den polarisierenden Kollimator **PK** eingetreten ist. Dieses Neutron **N1.2**↑ tritt nun in den Kanal **KC** der Cavity **MC** ein und trifft auf die nicht spinselektiv reflektierende Schicht **R1** und wird von dieser reflektiert, da der Winkel mit dem das Neutron **N1.2**↑ auf diese reflektierende Schicht trifft, kleiner als der Grenzwinkel $\Theta_C$ ist. Das Neutron **N1.2**↑ trifft danach auf die spinselektiv reflektierende Schicht **Rs1** und wird von dieser reflektiert, da es die gewünschte Spinkomponente (spin-up) aufweist. Anschließend trifft das Neutron **N1.2**↑ auf die Schichtenfolge **R1 - S1 - R2** und wird durch diese transmittiert, da der Winkel, mit dem das Neutron **N1.2**↑ jetzt auf die reflektierenden Schichten **R1** und **R2** trifft, größer als der Grenzwinkel $\Theta_C$ dieser Schichten ist, und verlässt die Cavity **MC** in der gleichen Richtung aber mit einer größeren Divergenz im Vergleich zu der Divergenz, mit der es in den polarisierenden Kollimator **PK** eingetreten ist, da dieses Neutron einmal an der diagonal zur Strahlachse angeordneten Schicht **R1** reflektiert wurde.

Das Neutron **N3.2**↓, das die nicht gewünschte Spinkomponente (spin-down) aufweist, tritt in den Kanal **K3** einer Schichtenfolge des polarisierenden Kollimators **PK** ein. Da der Eintrittswinkel des Neutrons **3.2**↓ kleiner ist als der Kollimatorwinkel $\Theta_K$ des polarisierenden Kollimators, tritt dieses Neutron **3.2**↓ ohne Wandberührung und ohne jegliche Beeinflussung durch den Kollimator hindurch. Das Neutron **3.2**↓ verlässt also den polarisierenden Kollimator **PK** in der gleichen Richtung, mit der gleichen Divergenz und mit der gleichen, nicht gewünschten Spinkomponente (spin-down), mit der es in diesen eingetreten ist. Dieses Neutron **N3.2**↓ tritt nun in den Kanal **KC** der Cavity **MC** ein und trifft auf die nicht spinselektiv reflektierende Schicht **R4** und wird von dieser reflektiert, da der Winkel, mit dem das Neutron **N3.2**↓ auf diese reflektierende Schicht trifft, kleiner als der Grenzwinkel $\Theta_C$ ist. Das Neutron **N3.2**↓ trifft danach auf die spinselektiv reflektierende Schicht **Rs2** und wird von dieser, da es die nicht gewünschte Spinkomponente (spin-down) aufweist, nicht reflektiert sondern transmittiert und durch die dahinter angeordnete Schicht **G2,** die aus absorbierendem Glas besteht, absorbiert. Das Neutron **N3.2↓** kann somit die Cavity **MC** nicht verlassen.

Somit ist gewährleistet, dass aus der Anordnung zur Polarisation eines Neutronenstrahls mit hoher Divergenz nur Neutronen austreten, die die gewünschte Spinkomponente **N1.1↑** und **N1.2↑** aufweisen, und alle Neutronen, die die nicht gewünschte Spinkomponente **N3.2↓** aufweisen, in einer absorbierenden Schicht der Anordnung absorbiert werden. Die hier beschriebene Ausführung, bestehend aus einem polarisierenden Kollimator **PK** und einer modifizierten Cavity **MC** erreicht einen Polarisierungsgrad bis zu 100 %.

Bei einer zweiten Ausführung der erfindungsgemäßen Anordnung wird in Strahlrichtung hinter dem ersten strahlungsoptischen Bauelement, dem polarisierenden Kollimator **PK,** ein zweiter analog aufgebauter polarisierender Kollimator **PK** angeordnet. Die Kanäle **K1, K2, K3, ...Kn** des ersten polarisierenden Kollimators **PK** sind parallel zur y-z-Ebene ausgerichtet, wobei die z-Richtung der Strahlrichtung entspricht. Seine Wirkungsweise ist zu Fig. 1 detailliert beschrieben.

Das zweite strahlungsoptische Bauelement ist ebenfalls ein polarisierender Kollimator **PK,** dessen Kanäle **K1, K2, K3,..., Kn** in Verlängerung der Kanäle des ersten polarisierenden Kollimators angeordnet sind, aber einen Anstellwinkel $\Theta_A > \Theta_K$ gegenüber der y-z-Ebene aufweisen, wobei sich die Eintrittsflächen der Kanäle des zweiten polarisierenden Kollimator **PK** auf der gleichen Ebene befinden wie die des ersten polarisierenden Kollimators **PK.** Daher treffen die aus dem ersten polarisierenden Kollimator austretenden nicht polarisierten Neutronen, die nur noch eine geringe Divergenz von ±0.5° aufweisen, mindestens einmal auf eine Wand mit einer spinselektiv reflektierenden Schicht **Rs1.1, Rs2.1, Rs3.1, ..., Rsn.1, Rs1.2, Rs2.2, Rs3.2, ..., Rsn.2** treffen. Dort werden sie in Abhängigkeit von ihrer Spinkomponente reflektiert bzw. transmittiert. Die Neutronen mit der gewünschten Spinkomponente spin-up werden an diesen reflektiert, während Neutronen mit der nicht gewünschten Spinkomponente spin-down an den spinselektiv reflektierenden Schichten nicht reflektiert werden, sondern durch diese transmittiert und dann in der dahinter angeordneten neutronenabsorbierenden Schicht **A1.1, A2.1, A3.1, A3.1, ..., An.1, A1.2, A2.2, A3.2, ..., An.2** absorbiert werden.

Die Neutronen, die bereits den ersten polarisierenden Kollimator PK mit der gewünschten Spinkomponente verlassen **N1.1↑, N1.2↑, N2.2↑, Nn.1↑,** werden im zweiten polarisierenden Kollimator in Abhängigkeit von ihrem Eintrittswinkel nicht oder beliebig oft an den Wänden mit den spinselektiv reflektierenden Schichten **Rs1.1, Rs2.1, Rs3.1, Rsn.1, Rs1.2, Rs2.2, Rs3.2, Rsn.2** reflektiert. Sie verlassen den zweiten polarisierenden Kollimator an seinem Ende ebenfalls mit der gewünschten Spinkomponente.

Um die volle Eintrittsdivergenz zu polarisieren, muss im zweiten polarisierenden Kollimator der Grenzwinkel der Wandbeschichtung gleich der Summe aus Anstellwinkel $\Theta_A$ und maximalem Divergenzwinkel sein.

Der zweite polarisierende Kollimator weist in Flugrichtung der Neutronen eine derartige Länge auf, dass jedes eintretende nicht polarisierte Neutron, das die gewünschte Spinkomponente aufweist, an den spinselektiv reflektierenden Schichten **Rs1.1, Rs2.1, Rs3.1, ..., Rsn.1, Rs1.2, Rs2.2, Rs3.2, ..., Rsn.2,** die an den beiden Seiten der neutronenleitenden Schichten, den Kanälen **K1, K2, K3, Kn,** angeordnet sind, mindestens einmal reflektiert wird. Tritt eine Doppelreflexion im zweiten polarisierenden Kollimator auf, so verlassen diese Neutronen das strahlungsoptische Bauelement mit dem gleichen Winkel wie sie eingetreten sind, d. h. diese Neutronen werden in ihrer Richtung nicht verändert.

Die nur einmal reflektierten Neutronen werden um den Winkel 2* $\Theta_A$ abgelenkt.

Somit ist gewährleistet, dass nur polarisierte Neutronen die erfindungsgemäße Anordnung verlassen.

Diese Ausführung der Anordnung hat einen weiteren Zusatzeffekt, der darin liegt, dass Neutronen mit Energien oberhalb eines bestimmten Wertes in der Anordnung absorbiert werden. Da der Grenzwinkel der spinselektiv reflektierenden Schicht nicht nur winkel- sondern auch wellenlängenabhängig ist, werden alle Neutronen mit Energien oberhalb des Wertes, der durch den Grenzwinkel gegeben ist, nicht reflektiert, sondern durch die reflektierende Schicht transmittiert und dann in der dahinter angeordneten neutronenabsorbierenden Schicht absorbiert. Dadurch können nur Neutronen, die die gewünschte Maximalenergie aufweisen, in ihrer Eintrittsrichtung den polarisierenden Kollimator verlassen. Somit wirkt diese Anordnung zusätzlich wie ein "Tiefpassfilter".

Eine dritte Ausführung der erfindungsgemäßen Anordnung kann als Kreuzpolarisator bezeichnet werden, bei dem in Strahlrichtung, der z-Richtung, hinter dem ersten polarisierenden Kollimator, ein zweiter analog aufgebauter polarisierender Kollimator angeordnet wird. Der erste polarisierende Kollimator **PK** ist derart im Strahl angeordnet, dass die beschichteten Seitenflächen der Kanäle parallel zur y-z-Ebene ausgerichtet sind. Die Wirkungsweise des ersten polarisierenden Kollimators **PK** ist zu Fig. 1 ausführlich dargestellt. Die Divergenz der hinter dem ersten polarisierenden Kollimator austretenden nichtpolarisierten Neutronen beträgt in der x-Richtung nur noch z. B. ±0.3°. Bei einem Kollimatorwinkel $\Theta_K$, der 10% der vollen Eintrittsdivergenz von 3° beträgt, beträgt der Anteil der nicht durch den ersten polarisierenden Kollimator polarisierten Neutronen 10% der eintretenden Neutronenstrahlen.

Der zweite polarisierende Kollimator **PK** ist nun so im Strahl angeordnet, dass die beschichteten Seitenflächen der Kanäle **K1, K2, K3, Kn** parallel zur x-z-Ebene ausgerichtet sind. Da die aus dem ersten polarisierenden Kollimator austretenden nicht polarisierten Neutronen in der x-Richtung nur noch eine Divergenz von z. B. ±0.3° aufweisen, wird die Divergenz dieser Neutronen im zweiten polarisierenden Kollimator **PK** durch die parallel zur x-z-Ebene ausgerichteten spinselektiv reflektierenden Schichten jetzt auch in der y-Richtung begrenzt. Beträgt der Kollimatorwinkel des zweiten

polarisierenden Kollimators ebenfalls $\Theta_K$ = 10% der vollen Eintrittsdivergenz, werden hier ebenfalls 10% der eintretenden Neutronenstrahlen nicht polarisiert. Da aber nur 10% der in den ersten polarisierenden Kollimator eintretenden Neutronen nicht polarisiert werden, treten nur 10% in den zweiten polarisierenden Kollimator ein. Somit verlassen nur noch 1 % nicht polarisierte Neutronen die erfindungsgemäße Anordnung. D. h. der Grad der Polarisation beträgt 98%, was einen sehr hohen Wert darstellt.

Aufstellung der verwendeten Bezugszeichen

| | |
|---|---|
| PK | Polarisierender Kollimator |
| K1, K2 ,K3, Kn | Kanäle des PK |
| SF1, SF2, SF3, SFn .. | Schichtenfolgen des PK |
| EF1, EF2, EF3, EFn | Eintrittsflächen in die Kanäle PK |
| A1.1, A1.2, A2.1, A1.2 A3.1, A3.2, An.1, An.2 | absorbierende Schichten des PK |
| Rs1.1, Rs 1.2, Rs 2.1, Rs 1.2 | |
| Rs 3.1, Rs 3.2, Rs n.1, Rsn.2 .. | spinselektiv reflektierende Schichten des PK |
| L | Länge des PK |
| d | Kanalbreite des PK |
| N1.1↑, N1.2↑, N2.2↑ Nn.1↑ | Neutronen mit der gewünschten Spinkomponente (spin-up) |
| N2.1↑ N3.1↓ N3.2↓ | Neutronen mit der nicht gewünschten Spinkomponente (spin-down) |
| MC | modifizierte Cavity |
| KC | Kanal der Cavity |
| G1, G2 | Seitenwände der MC, absorbierendes Glas |
| S1, S2 | diagonale Wände der MC, Si-Wafer |
| R1, R2,. R3,. R4, | reflektierende Schichten der MC |
| $\Theta_C$ | Grenzwinkel |
| $\Theta_K$ | Kollimatorwinkel |
| $\Theta_1, \Theta_2,$ | Eintrittswinkel von Neutronen |
| $\Theta_3$ | Anstellwinkel der diagonalen Wände |
| $\Theta_A$ | Anstellwinkel des Zweiten PK |

**Patentansprüche**

1.  Anordnung zur Polarisation eines Neutronenstrahls mit hoher Divergenz, bei der zwei strahlungsoptische Bauelemente im Strahlengang hintereinander angeordnet sind, wobei ein erstes strahlungsoptisches Bauelement ein Kollimator ist,
    **dadurch gekennzeichnet, dass**
    der Kollimator als polarisierender Kollimator (PK) ausgebildet ist und mindestens eine Schichtenfolge bestehend aus einem Neutronenleiterkanal (K1, K2, K3, Kn) mit parallelen ebenen Seitenflächen, an die jeweils eine spinselektiv reflektierende Schicht (Rs1.1, Rs1.2, Rs2.1, Rs2.2, Rs3.1, Rs3.2, Rsn.1, Rsn.2) angrenzt und auf die wiederum jeweils eine neutronenabsorbierende Schicht (A1.1, A1.2, A2.1, A2.2, A3.1, A3.2, An.1, An.2) folgt, aufweist,
    wobei die Kanäle (K1, K2, K3, Kn) des polarisierenden Kollimators (PK) parallel zur Strahlachse ausgerichtet sind und eine solche Länge (L) und Kanalbreite (d) aufweisen, dass Neutronen mit einem Eintrittswinkel $\Theta > \Theta_K$, wobei $\Theta_K$ = arctan (d/L) der Kollimatorwinkel ist, mindestens einmal auf eine spinselektiv reflektierende Schicht (Rs1.1, Rs1.2, Rs2.1, Rs2.2, Rs3.1, Rs3.2, Rsn.1, Rsn.2) treffen,
    und
    das zweite strahlungsoptische Bauelement eine modifizierte Cavity (MC) ist, bei der parallel zur Strahlachse angeordneten Seitenwände (G1, G2) aus neutronenabsorbierendem Material einem Kanal (KC) bilden und die an den zum Kanal (KC) weisenden Flächen mit spinselektiv reflektierenden Schichten (Rs1, Rs2) versehen sind, und bei der Diagonalelemente (S1, S2) aus Si-Wafem gebildet sind, die V-förmig im Kanal (KC) angeordnet sind, wobei die Splitze der V-Form am Beginn der Cavity (MC) angeordnet ist und die Enden der Diagonalelemente (S1, S2) am Ende der Cavity (MC) an den Seitenwänden (G1, G2) anliegen und jedes Diagonalelement (S1 oder S2) einen Anstellwinkel von $\Theta_3$ zur Strahlachse bildet und wobei die Diagonalelemente ein- oder beidseitig mit nicht-polarisierenden neutronenreflektierenden Schichten (R1, R2, R3, R4) versehen sind
    oder
    das zweite strahlungsoptische Bauelement so ausgebildet ist,

das wenn die Kanäle (K1, K2, K3, Kn) des ersten polarisierenden Kollimators (PK) parallel zur y-z-Ebene ausgerichtet sind, wobei die z-Richtung der Strahlrichtung entspricht, das zweite strahlungsoptische Bauelement ebenfalls ein analog aufgebauter polarisierender Kollimator (PK) ist, dessen Kanäle (K1, K2, K3, Kn) entweder in Verlängerung der Kanäle des ersten polarisierenden Kollimators angeordnet sind, aber einen Anstellwinkel $\Theta_A \geq \Theta_K$ gegenüber der y-z-Ebene aufweisen, oder dessen Kanäle (K1, K2, K3, Kn) parallel zur x-z-Ebene ausgerichtet sind.

2. Anordnung nach Anspruch 1,
   **dadurch gekennzeichnet, dass**
   die Neutronenleiterkanäle (K1, K2, K3, Kn) des polarisierenden Kollimators (PK) aus Si-Wafern gebildet sind.

3. Anordnung nach Anspruch 1,
   **dadurch gekennzeichnet, dass**
   die Neutronenleiterkanäle (K1, K2, K3, Kn) des polarisierenden Kollimators (PK) ein gasförmiges Medium aufweisen.

4. Anordnung nach Anspruch 1,
   **dadurch gekennzeichnet, dass**
   die Neutronenleiterkanäle (K1, K2, K3, Kn) des polarisierenden Kollimators (PK) ein Vakuum aufweisen.

5. Anordnung nach Anspruch 1,
   **dadurch gekennzeichnet, dass**
   die neutronenabsorbierenden Schichten (A1.1, A1.2, A2.1, A2.2, A3.1, A3.2, An.1, An.2) aus Gd gebildet sind.

6. Anordnung nach Anspruch 1,
   **dadurch gekennzeichnet, dass**
   die neutronenabsorbierenden Schichten (A1.1, A1.2, A2.1, A2.2, A3.1, A3.2, An.1, An.2) aus neutronenabsorbierendem Glas gebildet sind.

7. Anordnung nach Anspruch 1,
   **dadurch gekennzeichnet, dass**
   die spinselektiv reflektierenden Schichten (Rs1.1, Rs1.2, Rs2.1, Rs2.2, Rs3.1, Rs3.2, Rsn.1, Rsn.2) des polarisierenden Kollimators (PK) Superspiegel sind.

8. Anordnung nach Anspruch 1,
   **dadurch gekennzeichnet, dass**
   beide strahlungsoptischen Bauelemente im Strahlengang direkt hintereinander angeordnet sind und die Eintrittsfläche des zweiten strahlungsoptischen Bauelements mindestens so groß ist wie die Austrittsfläche des ersten strahlungsoptischen Bauelements.

**Claims**

1. Assembly for polarising a neutron beam with high divergence, in which two radiation optical components are arranged one behind the other in the beam path, wherein a first radiation optical component is a collimator, **characterized in that**
   the collimator is implemented as a polarising collimator and has at least one layer sequence consisting of a neutron guiding channel (K1, K2, K3) with parallel flat side faces, each of which is adjoined by a spin-selectively reflecting layer (Rs1.1, Rs1.2, Rs2.1, Rs2.2, Rs3.1, Rs3.2, Rsn.1, RSn.2) and which in turn is followed by a neutron-absorbing layer (A1.1, A1.2, A2.1, A2.2, A3.1, A3.2, An.1, An.2),
   wherein the channels (K1, K2, K3, kn) of the first radiation optical component (PK) are aligned parallel to the beam axis and have a length (L) and channel width (d), such that neutrons with an incidence angle $\Theta > \Theta_K$, where $\Theta_K = $ arctan (d/L) is the collimator angle, impinge at least once on a spin-selectively reflecting layer (Rs1.1, Rs1.2, Rs2.1, Rs2.2, Rs3.1, Rs3.2, Rsn.1, RSn.2),
   and
   the second radiation optical device is a modified cavity (MC), in which side walls (G1, G2) arranged parallel to the beam axis and made of neutron absorbing material, form a channel (KC) and which are provided with spin-selectively reflecting layers (Rs1, Rs2) on the surfaces facing the channel (KC), and in which the diagonal elements (S1, S2) are formed from Si-wafers which are arranged in a V-shape in the channel (KC), the peak of the V-shape being arranged at the beginning of the cavity (MC) and the ends of the diagonal elements (S1, S2) at the end of the cavity (MC) resting on the side walls (G1, G2) and each diagonal element (S1 or S2) forming an angle of attack of $\Theta_3$ to the beam axis, and wherein the diagonal elements (S1, S2) are provided with non-polarizing neutron-reflecting layers (R1, R2, R3, R4) on one or both sides

or

the second radiation optical component is implemented such that, when the channels (K1, K2, K3, Kn) of the first polarising collimator (PK) are aligned parallel to the y-z-plane, the second radiation optical component is also a polarising collimator (PK) designed in analogous manner, the channels (K1, K2, K3, Kn) of which are either arranged along the extension of the channels of the first polarizing collimator, but have an angle of attack $\Theta_A \geq \Theta_K$ relative to the y-z-plane, or the channels (K1, K2, K3, Kn) of which are aligned parallel to the x-z-plane.

2. Assembly according to Claim 1,
   **characterized in that**
   the neutron guiding channels (K1, K2, K3, Kn) of the polarising collimator (PK) are formed from Si-wafers.

3. Assembly according to Claim 1,
   **characterized in that**
   the neutron guiding channels (K1, K2, K3, Kn) of the polarising collimator (PK) comprise a gaseous medium.

4. Assembly according to Claim 1,
   **characterized in that**
   the neutron guiding channels (K1, K2, K3, Kn) of the radiation optical component (PK) comprise a vacuum.

5. Assembly according to Claim 1,
   **characterized in that**
   the neutron-absorbing layers (A1.1, A1.2, A2.1, A2.2, A3.1, A3.2, An.1, An.2) are formed from Gd.

6. Assembly according to Claim 1,
   **characterized in that**
   the neutron-absorbing layers (A1.1, A1.2, A2.1, A2.2, A3.1, A3.2, An.1, An.2) are formed from neutron-absorbing glass.

7. Assembly according to Claim 1,
   **characterized in that**
   the spin-selectively reflecting layers (Rs1.1, Rs1.2, Rs2.1, Rs2.2, Rs3.1, Rs3.2, Rsn.1, RSn.2) of the radiation optical component (PK) are supermirrors.

8. Assembly according to Claim 1,
   **characterized in that**
   both radiation optical components are arranged in the beam path one directly behind the other and the incidence surface of the second radiation optical component is at least as large as the output surface of the first radiation optical component.

**Revendications**

1. Agencement pour la polarisation d'un faisceau de neutrons à divergence élevée, dans lequel deux composants à rayonnement optique sont disposés l'un derrière l'autre dans le trajet du faisceau, un premier composant à rayonnement optique étant un collimateur,
   **caractérisé en ce que** le collimateur est réalisé en tant que collimateur polarisant (PK) et présente au moins une succession de couches se composant d'un canal de conducteur à neutrons (K1, K2, K3, Kn) avec des surfaces latérales planes parallèles, une couche à réflexion sélective de spin (Rs1.1, Rs1.2, Rs2.1, Rs2.2, Rs3.1, Rs3.2, Rsn.1, Rsn.2) étant respectivement contiguë de celles-ci et une couche d'absorption de neutrons (A1.1, A1.2, A2.1, A2.2, A3.1, A3.2, An.1, An.2) venant respectivement à son tour à la suite de celles-là,
   les canaux (K1, K2, K3, Kn) du collimateur polarisant (PK) étant orientés parallèlement à l'axe de faisceau et présentant une longueur (L) et une largeur de canal (d) telles, que des neutrons tombent au moins une fois, selon un angle d'entrée $\Theta > \Theta_K$, $\Theta_K = \arctan(d/L)$ étant l'angle de collimateur, sur une couche à réflexion sélective de spin (Rs1.1, Rs1.2, Rs2.1, Rs2.2, Rs3.1, Rs3.2, Rsn.1, Rsn.2),
   et **en ce que** le deuxième composant à rayonnement optique est une cavité modifiée (MC) dans laquelle des parois latérales (G1, G2) en un matériau absorbant les neutrons disposées parallèlement à l'axe de faisceau forment un canal (KC) et les surfaces tournées vers le canal (KC) étant munies de couches à réflexion sélective de spin (Rs1, Rs2), et dans laquelle des éléments diagonaux (S1, S2) sont formés par des plaquettes de Si, lesquelles sont disposées en forme de V dans le canal (KC), la pointe de la forme en V étant disposée au début de la cavité (MC) et les extrémités des éléments diagonaux (S1, S2) à la fin de la cavité (MC) reposant contre les parois latérales (G1, G2) et chaque élément diagonal (S1 ou S2) formant un angle d'inclinaison de $\Theta_3$ par rapport à l'axe de faisceau et moyennant quoi les éléments diagonaux sont munis, d'un côté ou des deux côtés, de couches de réflexion de neutrons non polarisantes (R1, R2, R3, R4),

ou bien **en ce que** le deuxième composant à rayonnement optique est réalisé de manière à ce que, lorsque les canaux (K1, K2, K3, Kn) du premier collimateur polarisant (PK) sont orientés parallèlement au plan y-z, moyennant quoi la direction z correspond à la direction de faisceau, le deuxième composant à rayonnement optique soit également un collimateur polarisant (PK) structuré de manière analogue, dont les canaux (K1, K2, K3, Kn) sont disposés en prolongement des canaux du premier collimateur polarisant, mais en présentant un angle d'inclinaison de $\Theta_A \geq \Theta_K$ par rapport au plan y-z, ou bien dont les canaux (K1, K2, K3, Kn) sont orientés parallèlement au plan x-z.

2. Agencement selon la revendication 1, **caractérisé en ce que** les canaux de conducteur à neutrons (K1, K2, K3, Kn) du collimateur polarisant (PK) sont formés par des plaquettes de Si.

3. Agencement selon la revendication 1, **caractérisé en ce que** les canaux de conducteur à neutrons (K1, K2, K3, Kn) du collimateur polarisant (PK) présentent un milieu gazeux.

4. Agencement selon la revendication 1, **caractérisé en ce que** les canaux de conducteur à neutrons (K1, K2, K3, Kn) du collimateur polarisant (PK) présentent un vide.

5. Agencement selon la revendication 1, **caractérisé en ce que** les couches d'absorption de neutrons (A1.1, A1.2, A2.1, A2.2, A3.1, A3.2, An.1, An.2) sont formées en Gd.

6. Agencement selon la revendication 1, **caractérisé en ce que** les couches d'absorption de neutrons (A1.1, A1.2, A2.1, A2.2, A3.1, A3.2, An.1, An.2) sont formées par du verre d'absorption de neutrons.

7. Agencement selon la revendication 1, **caractérisé en ce que** les couches à réflexion sélective de spin (Rs1.1, Rs1.2, Rs2.1, Rs2.2, Rs3.1, Rs3.2, Rsn.1, Rsn.2) du collimateur polarisant (PK) sont des super-miroirs.

8. Agencement selon la revendication 1, **caractérisé en ce que** les deux composants à rayonnement optique sont disposés dans le trajet du faisceau directement l'un derrière l'autre et **en ce que** la surface d'entrée du deuxième composant à rayonnement optique est au moins aussi grande que la surface de sortie du premier composant à rayonnement optique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19844300 A1

- DE 19936898 C1

**In der Beschreibung aufgeführte Nicht-Patentliteratur**

- **A. FREUND ; R. PYNN ; W. G. STIRLING ; C. M. E. ZEYEN.** *Physica B,* 1983, vol. 120, 86-90
- **W. HEIL ; K. ANDERSEN ; D. HOFMANN ; H. HUMBLOT ; J. KULDA ; E. LELIEVRE-BERNA ; O. SCHÄRPF ; F. TASSET.** *Physica B,* 1998, vol. 241-243, 56-63
- Neutron Optical Devices. **F. MEZEI.** Proc. SPIE. 1989, vol. 983, 10-17

- **TH. KRIST ; C. PAPPAS ; TH. KELLER ; F. MEZEI.** *Physica B,* 1995, vol. 213-214, 939-941
- **TH. KRIST ; S. J. KENNEDY ; T. J. HICKS ; F. MEZEI.** *Physica B,* 1998, vol. 241-243, 82-85
- **TH. KRIST ; J. PETERS ; H. M. SHIMIZU ; J. SUZUKI ; T. OKU.** *Physica B,* 2005, vol. 356, 197-200
- *Physica B,* 2006, vol. 385-386, 1107-1109